# EUROPÄISCHE PATENTSCHRIFT

(11) **EP 2 627 658 B1**
(45) Veröffentlichungstag und Bekanntmachung des Hinweises auf die Patenterteilung: **13.08.2014**
(21) Anmeldenummer: 11767632.0
(22) Anmeldetag: 06.10.2011
(51) Int. Cl.: C07F 13/00, C07F 15/02

(54) **VERFAHREN ZUR HERSTELLUNG VON 3,7-DIAZA-BICYCLO[3.3.1]NONAN-METALLKOMPLEXEN**
METHOD FOR PRODUCING 3,7-DIAZA-BICYCLO[3.3.1]NONANE METAL COMPLEXES
PROCÉDÉ DE FABRICATION DE COMPLEXES MÉTALLIQUES DE 3,7-DIAZA-BICYCLO[3.3.1]NONANE

(30) Priorität: 11.10.2010 EP 10290547
(43) Veröffentlichungstag der Anmeldung: 21.08.2013
(73) Patentinhaber: WeylChem Switzerland AG, 4132 Muttenz (CH); Clariant Specialty Fine Chemicals (France), 60350 Trosly Breuil (FR)
(72) Erfinder: SIDOT, Christian, F-60200 Compiègne (FR); CARON, Audrey, F-60200 Compiegne (FR); LADWIG, Miriam, 63128 Dietzenbach (DE); REINHARDT, Gerd, 65779 Kelkheim (DE)
(74) Vertreter: Ackermann, Joachim
(86) Internationale Anmeldenummer: PCT/EP2011/004982
(87) Internationale Veröffentlichungsnummer: WO 2012/048815

(56) Entgegenhaltungen:
- WO-A2-2006/072336
- DE-B3-102004 062 568
- BORZEL H ET AL: "Iron coordination chemistry with tetra-, penta- and hexadentate bispidine-type ligands", INORGANICA CHIMICA ACTA, ELSEVIER BV, NL, Bd. 337, 1. Januar 2002 (2002-01-01), Seiten 407-419, XP002400781, ISSN: 0020-1693, DOI: DOI:10.1016/S0020-1693(02)01100-3

## Beschreibung

Die Erfindung betrifft ein Verfahren zur Herstellung von Eisen- oder Mangankomplexen mit 3,7-Diaza-bicyclo[3.3.1]nonan-Liganden.

3,7-Diaza-bicyclo[3.3.1]nonan-Verbindungen stellen interessante Verbindungen für verschiedene Anwendungen dar. Unter anderem sind Übergangsmetallkomplexe, die einen Liganden gemäß Formel (1) 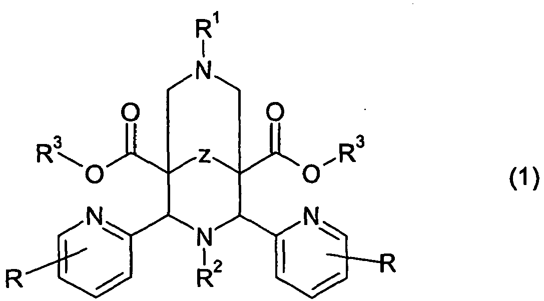 enthalten, sehr effektive Katalysatoren, die in Kombination mit Peroxiden zur Bleiche farbiger Anschmutzungen in Wasch- und Reinigungsmitteln eingesetzt werden können. Beispiele hierfür finden sich in WO 00/60045 und EP 1 678 286. Für diese Anwendung sind hohe Produktreinheiten erforderlich, da Spuren freier Metallionen zu unerwünschten Nebenreaktionen und damit zur Schädigung des Waschgutes beitragen können. Einige dieser Komplexe sind aber auch überaus wirksam in Gegenwart von Luftsauerstoff und ermöglichen eine Bleiche ölhaltiger Anschmutzungen unter Verzicht auf die Verwendung der ansonsten üblichen Wasserstoffperoxide oder anorganischen Persalze. Beispiele hierfür werden u. a. in WO 03/104234 beschrieben.

Aufgrund ihres Wirkmechanismus mit Sauerstoff hat sich in jüngster Zeit ein weiteres Anwendungsgebiet für diese Substanzklasse erschlossen. So wird in WO 2008/003652 die Verwendung solcher Übergangsmetallkomplexe als Katalysatoren für die Trocknung von Alkyd-basierenden Farben und Lacken beschrieben. Hierbei dienen sie als umweltfreundliche Alternative zu Cobalthaltigen Fettsäurederivaten, die im Verdacht stehen, Krebs zu erzeugen.

Liganden der Formel (1) und deren Metallkomplexe sind in der Literatur eingehend beschrieben. Die Ligandsynthese wird z. B. in Arfneimittelforschung 1965, 15(11), 1327-1330, in Eur. J. Org. Chem. (2008) 1019 -1030 oder in WO 2006/133869 beschrieben, während in WO 00/60045, WO 02/48301 und in Inorg. Chimica Acta, 337 (2002) 407- 419 Komplexierungsreaktionen beschrieben werden.

Die bekannten Komplexierungsreaktionen erfolgen durch Umsetzung des jeweiligen Liganden der Formel (1) mit einem Metallsalz in homogener oder heterogener Lösung. In den meisten Fällen wird dabei wasserfrei in einem organischen Lösemittel gearbeitet. Dabei werden sowohl der Ligand als auch das Metallsalz separat in organischen Lösemitteln wie Acetonitril oder Methanol gelöst und anschließend die Komplexbildung in homogener Lösung durchgeführt. Hierbei wird unter Argon oder Stickstoff und wasserfreien Bedingungen gearbeitet. Da auch die gebildeten Metallkomplexe gute Löslichkeit im Lösemittelgemisch aufweisen, muss zur Isolierung der Komplexe ein weiteres Lösemittel (meist Ether) eingesetzt werden, um das Produkt in kristalliner Form isolieren zu können. Häufig muss der Komplex anschließend noch zur weiteren Reinigung umkristallisiert werden. Die Ausbeuten sind dabei nur moderat und liegen zwischen 40 und 70 %.

Die beschriebenen Syntheseverfahren erfordern für die Isolierung des Endproduktes mindestens zwei verschiedene organische Lösemittel und streng wasserfreie Bedingungen (wasserfreie Lösungsmittel, Argon- oder Stickstoff-Überlagerung der Reaktion), wodurch die großtechnische Umsetzung der Reaktion Probleme und Kosten verursacht.

Unter bestimmten Bedingungen kann die Komplexierungsreaktion auch als heterogene Reaktion in Wasser durchgeführt werden, wie z. B. in WO 2010/069524 beschrieben. Hierbei wird eine wässrige Lösung eines Eisen(II)-Salzes zu einer Suspension des Liganden in Wasser gegeben, wobei nach einer gewissen Reaktionszeit der Eisen(II)-Komplex des Liganden (1) entweder durch Sprühtrocknung oder durch Filtration und Trocknung isoliert wird. Nach diesem Verfahren werden zwar hohe Ausbeuten erhalten, jedoch ist die Reinheit des Komplexes nur in der Größenordnung von 95 %. Dies ist nicht erstaunlich, da bei der Sprühtrocknung keine Nebenprodukte wie Eisen(III)-Ionen, die immer in Eisen(II)-Salzen vorhanden sind, und nicht umgesetzter Ligand, abgetrennt werden können. Dies ist auch bei der Isolierung durch Filtration der Fall, da der unkomplexierte Ligand unlöslich in Wasser ist und im Endprodukt verbleibt. Auch bei dieser Fahrweise ist es nur sehr schwer möglich, anhaftende Restmengen von Eisen(III)-Salzen zu entfernen, da der Eisen(II)-Komplex des Liganden der Formel (1) eine Wasserlöslichkeit von 7 Gew.-% aufweist und bei zu häufigem Waschen die isolierte Ausbeute erniedrigt wird.

Es stellte sich somit die Aufgabe, ein verbessertes großtechnisch durchführbares Verfahren zur Herstellung von Metallkomplexen mit Liganden der Formel (1) zur Verfügung zu stellen, wobei die Metallkomplexe insbesondere mit hohen Reinheiten erhalten werden können.

Überraschenderweise wurde nun gefunden, dass diese Aufgabe gelöst wird und Eisen- und Mangankomplexe der nachfolgenden Formel (2) in hohen Reinheiten hergestellt werden können, wenn im Lösemittelgemisch Aceton/Wasser gearbeitet wird.

Gegenstand der vorliegenden Erfindung ist daher ein Verfahren zur Herstellung eines oder mehrerer Metallkomplexe der Formel (2)

[MₐLₓXₙ]Yₘ (2)

wobei
- M: ein Metall aus der Gruppe Mn(II), Mn(III), Mn(IV), Fe(II), Fe(III) oder Fe(IV) ist,
- X: eine koordinierende Verbindung ausgewählt aus mono-, bi- oder trigeladenen Anionen oder neutralen Molekülen ist, die an ein Metall mono-, bi- oder tridentat koordinieren können, vorzugsweise OH⁻, NO₃⁻, NO, S²⁻, R^{a}S⁻, PO₄³⁻, H₂O, CO₃²⁻, R^{b}OH, Cl⁻, Br⁻, CN⁻, ClO4⁻, R^{a}COO⁻ oder SO₄²⁻, wobei R^{a} H oder C₁-C₄ Alkyl und R^{b} C₁-C₄ Alkyl ist,
- Y: ein nicht koordinierendes Gegenion darstellt, welches den Ladungsausgleich des Komplexes gewährleistet, vorzugsweise R^{c}SO₄⁻, SO₄²⁻, NO₃⁻, Cl⁻, Br⁻, I⁻, ClO₄⁻, BF₄⁻, PF₆⁻, oder R^{c}SO₃⁻, wobei R^{c} H oder C₁-C₄ Alkyl ist,
- a: 1 oder 2 und vorzugsweise 1 ist,
- x: 1 oder 2 und vorzugsweise 1 ist,
- n: eine Zahl von 0 bis 4 ist,
- m: eine Zahl von 0 bis 8 ist, und
- L: einen Liganden der Formel (1) oder seine protonierte oder deprotonierte Form 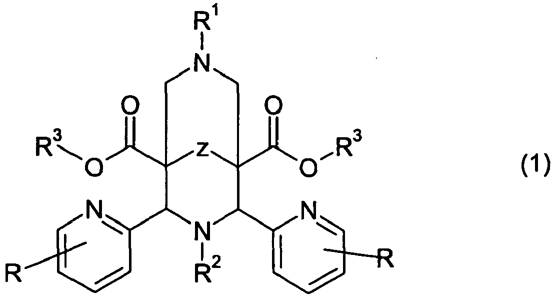
darstellt, wobei
- R: Wasserstoff, Hydroxyl oder C₁-C₄ Alkyl ist;
- R¹: C₁-C4 Alkyl, C₆-C₁₀ Aryl, Pyridinyl-C₁-C₄-alkyl oder (CH₂)ₖN(C₁-C₄-alkyl)₂ ist;
- R²: C₁-C₂₀ Alkyl, C₆-C₁₀ Aryl oder Pyridinyl-C₁-C₄-alkyl ist;
- R³: C₁-C₄ Alkyl ist;
- z: C=O oder C(OH)₂ ist und
- k: eine Zahl von 1 bis 6 bedeutet,
dadurch gekennzeichnet, dass die Umsetzung eines oder mehrerer Liganden der Formel (1) mit einem Eisen- oder Mangansalz, insbesondere Eisen(II)-chlorid, in einem Aceton/Wasser-Gemisch in dem Temperaturbereich von 0 bis 50 °C, vorzugsweise 5 bis 35 °C und besonders bevorzugt 10 bis 25 °C stattfindet und hierzu eine Lösung oder eine Suspension, vorzugsweise eine Lösung, des einen oder der mehreren Liganden der Formel (1) in Aceton mit einer wässrigen Metallsalz-Lösung des Eisen- oder Mangansalzes in dem Temperaturbereich, bei dem die Umsetzung stattfindet, in Kontakt gebracht wird.

Die Liganden der Formel (1) sind gut löslich in Aceton. Die Metallkomplexe der Formel (2) sind schlecht löslich in Aceton/Wasser-Mischungen. Bei Zugabe der wässrigen Lösung des Metallsalzes zu der Lösung des Liganden der Formel (1) in Aceton oder umgekehrt kommt es unmittelbar zu einer Komplexierungsreaktion, aus der der entsprechende Metallkomplex der Formel (2) ausfällt. Da sowohl nicht umgesetzter Ligand der Formel (1) als auch eventuell nicht umgesetztes Metallsalz in Aceton/Wasser gut löslich sind, können sie nach Isolierung des Metallkomplexes der Formel (2) gut von diesem abgetrennt werden. So gelangt man in guten Raum-Zeit-Ausbeuten zu den gewünschten Metallkomplexen der Formel (2) in hohen Reinheiten.

Die nach dem erfindungsgemäßen Verfahren hergestellten Metallkomplexe der Formel (2) haben vorzugsweise Reinheiten > 99 % (Bestimmung nach HPLC).

Besonders bevorzugt werden mit dem erfindungsgemäßen Verfahren ein oder mehrere Komplexe der Formel [FeLCl]Cl, [FeL(SO₄)], [MnLCl]Cl, [MnL(SO₄)], [FeLCl]PF₆, [FeL(H₂O)][PF₆]₂ oder [FeL(H₂O)][BF₄]₂ hergestellt,
wobei L insbesondere ausgewählt ist aus der Gruppe bestehend aus
2,4-Di-(2-pyridyl)-3-methyl-7-(pyridin-2-ylmethyl)-3,7-diazabicyclo[3.3.1]nonan-9-on-1,5-dimethyl-dicarboxylat (N2Py3o),
2,4-Di-(2-pyridyl)-3-(pyridin-2-ylmethyl)-7-methyl-3,7-diazabicyclo[3.3.1]nonan-9-on-1,5-dimethyl-dicarboxylat (N2Py3u),
2,4-Di-(2-pyridyl)-3-methyl-7-(pyridin-2-ylmethyl)-3,7-diazabicyclo[3.3.1]nonan-9-on-1,5-diethyl-dicarboxylat,
2,4-Di-(2-pyridyl)-3,7-bis-(pyridin-2-ylmethyl)-3,7-diazabicyclo[3.3.1]nonan-9-on-1,5-dimethyl-dicarboxylat (N2Py4),
2,4-Di-(2-pyridyl)-3,7-dimethyl-3,7-diazabicyclo[3.3.1]nonan-9-on-1,5-dimethyl-dicarboxylat (N2Py2),
2,4-Di-(2-pyridyl)-3,7-dimethyl-3,7-diazabicyclo[3.3.1]nonan-9-on-1,5-diethyl-dicarboxylat,
2,4-Di-(2-pyridyl)-3-methyl-7-(N,N'-dimethylethylamin)-3,7-diazabicyclo[3.3.1]nonan-9-on-1,5-dimethyl-dicarboxylat
und den entsprechenden Dihydroxyketalen.

In einer hierunter wiederum bevorzugten Ausführungsform der Erfindung werden mit dem erfindungsgemäßen Verfahren ein oder mehrere Komplexe der Formel [FeLCl]Cl, [FeL(SO₄)], [MnLCl]Cl oder [MnL(SO₄)], besonders bevorzugt ein oder mehrere Komplexe der Formel [FeLCl]Cl oder [FeL(SO₄)] und insbesondere bevorzugt ein oder mehrere Komplexe der Formel [FeLCl]Cl hergestellt.

Die in das erfindungsgemäße Verfahren eingesetzten Liganden der Formel (1) werden durch das Verfahren komplexiert und finden sich somit in den hergestellten Metallkomplexen der Formel (2) wieder. Allerdings können sie in den Metallkomplexen der Formel (2) derart modifiziert vorliegen, dass eine in den Ausgangsliganden der Formel (1) enthaltene Keton- oder Carbonylgruppe z (z = C=O) durch die Anwesenheit von Wasser während des erfindungsgemäßen Verfahrens in die hydratisierte Form überführt wird (z = C(OH)₂). Dies bedeutet, dass die Liganden in den Metallkomplexen der Formel (2) als Dihydroxyketale vorliegen können, auch wenn sie in Form der Ketone in das erfindungsgemäße Verfahren eingesetzt worden sind.

Dass die Liganden oftmals in komplexierter Form als Dihydroxyketale (z = C(OH)₂) vorliegen, wird z. B. in Inorg. Chimica Acta, 337 (2002) 407- 419 durch Röntgenstrukturanalyse gezeigt.

Die Herstellung der Liganden im großtechnischen Maßstab kann gemäß den Angaben in DE 601 20 781 oder WO 2006/133869 nach folgendem Reaktionsschema erfolgen:

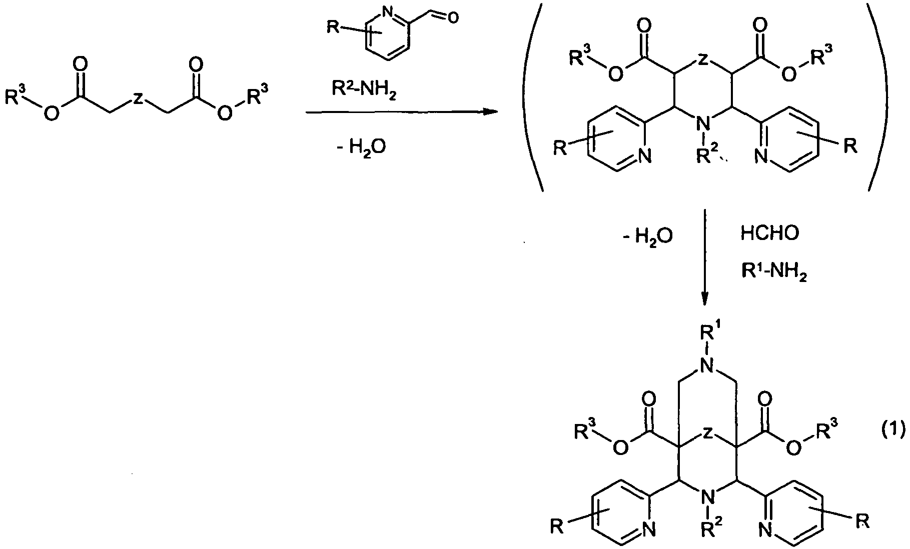

Ausgehend von Dicarbonsäurediester werden in einem C₁-C₄-Alkohol, beispielsweise Ethanol, Propanolen oder Butanolen, zwei Mannich Kondensationsschritte unter Wasserabspaltung durchgeführt. Nach beendeter Wasserabtrennung wird abgekühlt, das Produkt abfiltriert und gewaschen. Je nach Herstellung können die Liganden in Form mehr oder weniger großer Kristalle anfallen. Für die Komplexierungsreaktion können sie dann entweder lösemittelfeucht oder in getrockneter Form eingesetzt werden.

In einer weiteren bevorzugten Ausführungsform des erfindungsgemäßen Verfahrens sind die Liganden der Formel (1) ausgewählt aus der Gruppe bestehend aus 2,4-Di-(2-pyridyl)-3-methyl-7-(pyridin-2-ylmethyl)-3,7-diazabicyclo[3.3.1]nonan-9-on-1,5-dimethyl-dicarboxylat (N2Py3o), 2,4-Di-(2-pyridyl)-3,7-dimethyl-3,7-diazabicyclo[3.3.1]nonan-9-on-1,5-dimethyl-dicarboxylat (N2Py2) und den entsprechenden Dihydroxyketalen.

Koordinierende Verbindungen X der Metallkomplexe der Formel (2) stammen vorzugsweise aus dem in dem erfindungsgemäßen Verfahren verwendeten Eisen- oder Mangansalz. Sie können aber z. B. auch aus dem Lösungsmittel stammen, insbesondere wenn X = H₂O ist.

Insbesondere bevorzugt sind koordinierende Verbindungen X ausgewählt aus der Gruppe bestehend aus Cl⁻ und SO₄2⁻. Hierunter bevorzugt ist Cl⁻.

Auch nicht koordinierende Gegenionen Y können vorzugsweise aus dem in dem erfindungsgemäßen Verfahren verwendeten Eisen- oder Mangansalz stammen, beispielsweise wenn Y die gleiche Bedeutung wie X besitzt.

Insbesondere bevorzugt sind nicht koordinierende Gegenionen Y ausgewählt aus der Gruppe bestehend aus Cl⁻ und SO₄²⁻. Hierunter bevorzugt ist Cl⁻.

In einer bevorzugten Ausführungsform der Erfindung haben X und Y die gleiche Bedeutung.

Im Folgenden wird das in dem erfindungsgemäßen Verfahren verwendete Eisen- oder Mangansalz auch kurz als "Metallsalz" bezeichnet.

Vorzugsweise wird als Metallsalz ein Metall(II)-salz für das erfindungsgemäße Verfahren verwendet. In einer hierunter bevorzugten Ausführungsform der Erfindung ist das Metall(II)-salz ein Eisen(II)-salz, wobei Eisen(II)-chlorid und Eisen(II)-sulfat besonders bevorzugt sind. In einer weiteren hierunter bevorzugten Ausführungsform der Erfindung ist das Metall(II)-salz ausgewählt aus der Gruppe bestehend aus Eisen(11)-chlorid, Eisen(II)-sulfat, Mangan(II)-chlorid und Mangan(II)-sulfat. Als Metallsalz ist Eisen(II)-chlorid insbesondere bevorzugt.

In einer besonders bevorzugten Ausführungsform des erfindungsgemäßen Verfahrens werden ein oder mehrere Komplexe der Formel [FeLCl]Cl hergestellt, worin L 2,4-Di-(2-pyridyl)-3-methyl-7-(pyridin-2-ylmethyl)-3,7-diazabicyclo[3.3.1]nonan-9-on-1,5-dimethyl-dicarboxylat (N2Py3o) oder das entsprechende Dihydroxyketal bedeutet. Hierbei werden 2,4-Di-(2-pyridyl)-3-methyl-7-(pyridin-2-ylmethyl)-3,7-diazabicyclo[3.3.1]nonan-9-on-1,5-dimethyl-dicarboxylat oder das entsprechende Dihydroxyketal oder Mischungen davon mit Eisen(II)-chlorid umgesetzt.

In einer weiteren bevorzugten Ausführungsform des erfindungsgemäßen Verfahrens werden die Liganden L in Form der Ketone (z = C=O) in dem Verfahren eingesetzt.

In einer weiteren bevorzugten Ausführungsform des erfindungsgemäßen Verfahrens werden ein oder mehrere Metallkomplexe der Formel (2) hergestellt, worin die komplexierten Liganden L in Form der Dihydroxyketale (z = C(OH)₂) vorliegen.

Das erfindungsgemäße Verfahren besteht ganz allgemein darin, dass der eine oder die mehreren Liganden der Formel (1) in Aceton gelöst oder suspendiert werden und bei den genannten Temperaturen mit einer wässrigen Metallsalzlösung in Kontakt und zur Umsetzung gebracht werden. Vorteilhafter Weise geschieht dies unter Rühren des Reaktionsgemisches.

Das erfindungsgemäße Verfahren erfolgt vorzugsweise derart, dass der eine oder die mehreren Liganden der Formel (1) in Aceton gelöst oder suspendiert werden und unter Rühren mit der wässrigen Metallsalz-Lösung des Eisen- oder Mangansalzes versetzt werden.

Die Liganden der Formel (1) können in getrockneter oder isolierter Form in das erfindungsgemäße Verfahren eingesetzt werden. Die Liganden der Formel (1) können aber auch nach ihrer Herstellung und Abtrennung aus dem Reaktionsgemisch, wie z. B. nach ihrer Herstellung und Abtrennung durch Filtration, und gegebenenfalls nach erfolgtem Waschen, ohne oder ohne vollständige Trocknung in lösemittelfeuchter Form in das erfindungsgemäße Verfahren eingesetzt werden. In diesem Fall werden die Liganden der Formel (1) zusammen mit Lösemittel in das erfindungsgemäße Verfahren eingesetzt. Das entsprechende Lösemittel liegt dann vorzugsweise in einer Menge < 30 Gew.-% und besonders bevorzugt in einer Menge < 20 Gew.-% vor, jeweils bezogen auf die Menge der Liganden der Formel (1). Das Lösemittel, das in diesem Fall zusammen mit den Liganden der Formel (1) in das erfindungsgemäße Verfahren eingebracht wird, ist vorzugsweise ein Gemisch aus Wasser und organischem Lösemittel und besonders bevorzugt ein Wasser/Alkohol-Gemisch. Der Alkohol ist vorzugsweise ausgewählt aus C₁-C₄-Alkoholen und ist insbesondere bevorzugt iso-Butanol.

In dem erfindungsgemäßen Verfahren beträgt das Gewichtsverhältnis Aceton : Ligand der Formel (1) vorzugsweise von 15,0 : 1,0 bis 0,5 : 1,0 und besonders bevorzugt von 10,0 : 1,0 bis 1,2 : 1,0. Dabei ist die benötigte Acetonmenge auf die Löslichkeit des Liganden der Formel (1) in Aceton anzupassen und kann deshalb je nach Ligand der Formel (1) variieren.

In dem erfindungsgemäßen Verfahren beträgt das Molverhältnis Ligand der Formel (1) : Metallsalz vorzugsweise von 0,9 : 1,0 bis 1,2 : 1,0. Besonders bevorzugt werden pro 1 Mol Ligand der Formel (1) 0,99 bis 1,01 Mol Metallsalz verwendet.

In dem erfindungsgemäßen Verfahren wird das Metallsalz in wässriger Lösung vorzugsweise in einer Konzentration von 10 bis 50 Gew.-% und besonders bevorzugt in einer Konzentration von 20 bis 40 Gew.-% eingesetzt.

Bei Zugabe des Metallsalzes zu dem einen oder den mehreren gelösten oder suspendierten Liganden der Formel (1) tritt eine leichte Wärmetönung auf und der Metallkomplex der Formel (2) fällt aus dem Lösemittelgemisch aus. Zur Vervollständigung der Reaktion kann nachgerührt werden. Anschließend kann das Produkt durch Filtration oder Zentrifugieren isoliert und gewaschen werden.

Die Abtrennung der Metallkomplexe der Formel (2) kann als Feststoff aus dem Reaktionsgemisch gemäß den dem Fachmann geläufigen Methoden erfolgen und erfolgt vorzugsweise durch Filtration. Vorzugsweise wird der Metallkomplex der Formel (2) nach der Abtrennung aus dem Reaktionsgemisch gewaschen. Zum Waschen werden vorzugsweise Aceton, Wasser oder Aceton/Wasser-Gemische verwendet. Vorzugsweise wird der Metallkomplex nach der Abtrennung aus dem Reaktionsgemisch und vorzugsweise nach dem Waschen getrocknet.

Vorzugsweise wird das erfindungsgemäße Verfahren bei Temperaturen von 5 bis 35 °C und besonders bevorzugt bei Temperaturen von 10 bis 25 °C durchgeführt. Insbesondere bei diesen Temperaturen erhält man in hoher Ausbeute kristalline Metallkomplexe der Formel (2) mit sehr guten Filtrationseigenschaften und niederen Restfeuchten im Filterkuchen. Nach Trocknung der Metallkomplexe der Formel (2) erhält man ein frei fließendes Pulver, auf dessen Mahlung verzichtet werden kann.

Das erfindungsgemäße Verfahren kann unter Schutzgasatmosphäre, wie z. B. unter Stickstoffatmosphäre, durchgeführt werden.

Vorzugsweise wird das erfindungsgemäße Verfahren unter Umgebungsdruck durchgeführt.

In einer weiteren bevorzugten Ausführungsform der Erfindung haben X und Y eine unterschiedliche Bedeutung. In diesem Fall können z. B. zunächst Metallkomplexe der Formel (2), in denen X und Y die gleiche Bedeutung besitzen und besonders bevorzugt Chlorid bedeuten, hergestellt und anschließend die nicht koordinierenden Gegenionen Y ausgetauscht werden. Bei dieser Vorgehensweise wird zum Austausch von Y vorzugsweise ein Alkali- oder Erdalkalisalz, welches das neue nicht koordinierende Gegenion Y enthält, verwendet. Beispielsweise können Metallkomplexe der Formel (2) mit Y = PF₆⁻ (Hexafluorophosphate) erhalten werden, indem zunächst Metallkomplexe mit X = Y = Cl⁻ hergestellt werden und das nicht koordinierende Gegenion Cl⁻ anschließend mittels KPF₆ durch das neue nicht koordinierende Gegenion PF₆⁻ ausgetauscht wird. Derartige Austauschreaktionen sind dem Fachmann allgemein bekannt.

Im Vergleich zu den Verfahren gemäß dem Stand der Technik erzielt man bei dem erfindungsgemäßen Verfahren gute Raum-Zeit-Ausbeuten, kurze Filtrier- und Trockenzeiten und hohe Produktreinheiten.

Nachfolgende Beispiele sollen die Erfindung näher erläutern ohne sie darauf einzuschränken.

### Beispiele

### Herstellung des Liganden 2,4-Di-(2-pyridyl)-3-methyl-7-(pyridin-2-ylmethyl)-3,7-diazabicyclo[3.3.1]nonan-9-on-1,5-dimethyl-dicarboxylat (N2Py3o)

11,2 kg Acetondicarbonsäuredimethylester (97 Gew.-%ig; 64 mol) werden in 15 kg iso-Butanol gelöst. Die Lösung wird auf 10 °C abgekühlt, anschließend 13,4 kg Pyridin-2-aldehyd (99 Gew.-%ig, 125 mol) in 10 kg iso-Butanol, gefolgt von 4,8 kg Methylamin (40 Gew.-% in Wasser, 62 mol) so zugetropft, dass die Temperatur bei gleich bleibender Kühlung gehalten wird. Die Reaktionsmischung wird dann auf 40 - 45 °C erwärmt und im Vakuum bei 40 - 45 °C Innentemperatur ein Azeotrop (17 Liter) aus iso-Butanol und Wasser abdestilliert. Währenddessen werden 15 Liter iso-Butanol kontinuierlich zudosiert. Nach Abkühlung auf Raumtemperatur werden 8,4 kg Aminomethylpyridin (78 mol) zudosiert und der Dosiertrichter mit 7,0 kg iso-Butanol nachgewaschen. Dann werden 13,5 kg Formaldehydlösung (37 Gew.% in Wasser, 166,5 mol) innerhalb von 15 - 30 Minuten zugegeben. Nach beendeter Zugabe wird die Mischung auf 55 - 60 °C erwärmt und 1,5 Stunden nachgerührt. Anschließend werden bei maximal 60 °C Innentemperatur 55 kg azeotropes Gemisch aus iso-Butanol und Wasser abdestilliert, während 36 kg iso-Butanol kontinuierlich zugegeben werden. Es wird mit Stickstoff belüftet und auf Raumtemperatur abgekühlt. Der gebildete Niederschlag wird abfiltriert und mit iso-Butanol gewaschen. Der Ligand kann in Form des feuchten Filterkuchens in die Komplexierungsreaktion eingesetzt werden oder aber im Vakuum bei 50 °C getrocknet werden. Dabei werden 23,3 kg (72,1 %) 2,4-Di-(2-pyridyl)-3-methyl-7-(pyridin-2-ylmethyl)-3,7-diazabicyclo[3.3.1]nonan-9-on-1,5-dimethyl-dicarboxylat in Form eines farblosen, kristallinen Pulvers erhalten.

### Beispiel 1

### Eisen (1+), chloro[dimethyl 9,9-dihydroxy-3-methyl-2,4-di(2-pyridinyl-κN)-7-[(2-pyridinyl-κN)methyl]-3,7-diazabicyclo[3.3.1]nonane-1,5-dicarboxylate-κN3, κN7]-, chlorid (1:1)

Es wurden 186,8 kg (362,7 mol) 2,4-Di-(2-pyridyl)-3-methyl-7-(pyridin-2-ylmethyl)-3,7-diazabicyclo[3.3.1]nonan-9-on-1,5-dimethyl-dicarboxylat in 1100 kg Aceton bei 10 - 14 °C unter Stickstoffatmosphäre gelöst. Anschließend wurde eine 30 Gew.-%ige FeCl₂-Lösung in Wasser (154 kg; 364 mol) innerhalb 1 Stunde hinzugegeben und 4 Stunden bei 18 - 22 °C nachgerührt. Der feinkristalline gelbe Niederschlag wurde innerhalb 15 Minuten abfiltriert und 2 Mal mit kaltem Aceton gewaschen. Das Produkt wurde bei 30 °C im Vakuum getrocknet. Man erhält 232,5 kg Eisen (1+), chloro[dimethyl 9,9-dihydroxy-3-methyl-2,4-di(2-pyridinyl-κN)-7-[(2-pyridinyl-κN)methyl]-3,7-diazabicyclo[3.3.1]nonane-1,5-dicarboxylate-κN3, κN7]-, chlorid (1:1) als gelbes Pulver. Aktivgehalt 99,9 % (HPLC); Ausbeute: 94 %.

### Vergleichsbeispiel 1 (gemäß WO 2010/069524)

In einen Reaktionskessel wurden 220,0 kg (12,2 mol) Wasser und 145,1 kg (280 mol) 2,4-di-(2-pyridyl)-3-methyl-7-(pyridin-2-ylmethyl)-3,7-diazabicyclo[3.3.1]nonan-9-one-1,5-dimethyl-dicarboxylate (N2Py3o) eingefüllt und unter Rühren eine homogene Suspension hergestellt. Anschließend werden 119,5 kg (283 mol) wässrige Eisen(II)-chloridlösung (30,2 Gew.-%ig) innerhalb von 120 Minuten zugegeben. Während dieser Zeit wird das Reaktionsgemisch auf 20 bis 25 °C gehalten. Zur Vervollständigung der Reaktion wird 25 Stunden nachgerührt und anschließend abfiltiert. Aufgrund der schlechten Filtrationseigenschaften wird nach 160 minütiger Filtrationszeit ein Filterkuchen mit 44 Gew.-% Restfeuchte erhalten, der anschließend im Wärmeschrank bei 50 °C innerhalb 125 Stunden getrocknet wird, um eine Restfeuchte von < 1 Gew.-% zu erreichen. Man erhielt auf diese Weise Eisen (1+), chloro[dimethyl 9,9-dihydroxy-3-methyl-2,4-di(2-pyridinyl-κN)-7-[(2-pyridinyl-κN)methyl]-3,7-diazabicyclo[3.3.1]nonane-1,5-dicarboxylate-κN3, κN7]-, chlorid (1:1) als gelbbraunen verbackenen Feststoff, der vor der weiteren Verarbeitung aufgemahlen werden muss. Ausbeute (telquel): 96,7 %; Reinheit: 95,4 % (HPLC); Ausbeute: 92,2 %.

### Beispiel 2

### Mangan(II)chlorid Komplex von 3,7-Dimethyl-9-oxo-2,4-di-2-pyridyl-3,7-diazabicyclo[3.3.1]nonan-1,5-dicarbonsäuremethylester

Der Ligand 3,7-Dimethyl-9-oxo-2,4-di-2-pyridyl-3,7-diazabicyclo[3.3.1]nonan-1,5-dicarbonsäuremethylester wurde gemäß Arzneimittelforschung 1965, 15(11), 1327 - 1330 hergestellt. 5 kg (11,4 mol) 3,7-Dimethyl-9-oxo-2,4-di-2-pyridyl-3,7-diazabicyclo[3.3.1]nonan-1,5-dicarbonsäuremethylester wurden bei Raumtemperatur (20 °C) in 60 kg Aceton gelöst. Unter Rühren wurden 2,26 kg (11,4 mol) Mangan(II)chlorid Tetrahydrat, gelöst in 5,26 kg Wasser innerhalb von 30 Minuten hinzugetropft. Es bildete sich sofort eine beige-farbene Suspension, die 30 Minuten nachgerührt wurde. Der Feststoff wurde anschließend abfiltriert, mit Aceton gewaschen und bei 30 °C unter reduziertem Druck getrocknet. Ausbeute: 6,21 kg (93,5 %) beigeweißes feinkristallines Pulver des Komplexes der Formel (2) mit M=Mn, X=Y=Cl⁻, R=H, R¹=R²=R³=CH₃. Reinheit > 99 % (HPLC).

### Beispiel 3

Eisen (1+), chloro[dimethyl 9,9-dihydroxy-3-methyl-2,4-di(2-pyridinyl-κN)-7-[(2-pyridinyl-κN)methyl]-3,7-diazabicyclo[3.3.1]nonane-1,5-dicarboxylate-κN3, κN7]-, chlorid (1:1), hergestellt aus feuchtem Filterkuchen des Liganden.

Es wurde gemäß Beispiel 1 verfahren, allerdings wurde der Ligand 2,4-Di-(2-pyridyl)-3-methyl-7-(pyridin-2-ylmethyl)-3,7-diazabicyclo[3.3.1]nonan-9-on-1,5-dimethyl-dicarboxylat nicht getrocknet, sondern in Form des feuchten Filterkuchens (85,6 Gew.-% Ligand, 11,5 Gew.-% H₂O, 2,9 Gew.-% iso-Butanol) zur Komplexierung eingesetzt. Ausbeute 92,2 % Eisen (1 +), chloro[dimethyl 9,9-dihydroxy-3-methyl-2,4-di(2-pyridinyl- κN)-7-[(2-pyridinyl-κN)methyl]-3,7-diazabicyclo[3.3.1]nonane-1,5-dicarboxylate-κN3, κN7]-, chlorid (1:1) als gelbes Pulver. Aktivgehalt 99,7 % (HPLC).

## Patentansprüche

1. Verfahren zur Herstellung eines oder mehrerer Metallkomplexe der Formel (2)
[MₐLₓXₙ]Yₘ (2)
wobei
M ein Metall aus der Gruppe Mn(II), Mn(III), Mn(IV), Fe(II), Fe(III) oder Fe(IV) ist,
X eine koordinierende Verbindung ausgewählt aus mono-, bi- oder trigeladenen Anionen oder neutralen Molekülen ist, die an ein Metall mono-, bi- oder tridentat koordinieren können,
Y ein nicht koordinierendes Gegenion darstellt, welches den Ladungsausgleich des Komplexes gewährleistet,
a 1 oder 2 ist,
x 1 oder 2 ist,
n eine Zahl von 0 bis 4 ist,
m eine Zahl von 0 bis 8 ist, und
L einen Liganden der Formel (1) oder seine protonierte oder deprotonierte Form 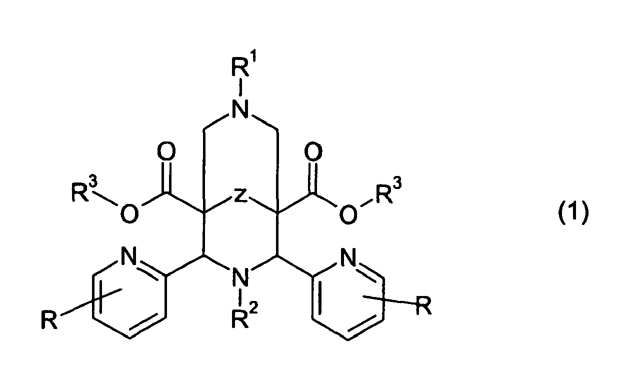 darstellt, wobei
R Wasserstoff, Hydroxyl oder C₁-C₄ Alkyl ist;
R¹ C₁-C₄ Alkyl, C₆-C₁₀ Aryl, Pyridinyl-C₁-C₄-alkyl oder (CH₂)ₖN(C₁-C₄-alkyl)₂ ist;
R² C₁-C₂₀ Alkyl, C₆-C₁₀ Aryl oder Pyridinyl-C₁-C₄-alkyl ist;
R³ C₁-C₄ Alkyl ist;
z C=O oder C(OH)₂ ist und
k eine Zahl von 1 bis 6 bedeutet,
**dadurch gekennzeichnet, dass** die Umsetzung eines oder mehrerer Liganden der Formel (1) mit einem Eisen- oder Mangansalz in einem Aceton/Wasser-Gemisch in dem Temperaturbereich von 0 bis 50 °C stattfindet und hierzu eine Lösung oder eine Suspension des einen oder der mehreren Liganden der Formel (1) in Aceton mit einer wässrigen Metallsalz-Lösung des Eisen- oder Mangansalzes in dem Temperaturbereich, bei dem die Umsetzung stattfindet, in Kontakt gebracht wird.

2. Verfahren nach Anspruch 1, **dadurch gekennzeichnet, dass** X ausgewählt ist aus der Gruppe bestehend aus OH⁻, NO₃⁻, NO, S²⁻ , R^{a}S⁻, PO₄³⁻, H₂O, CO₃²⁻, R^{b}OH, Cl⁻, Br⁻, CN⁻, ClO₄⁻, R^{a}COO- und SO₄²⁻, wobei R^{a} H oder C₁-C₄ Alkyl und R^{b} C₁-C₄-Alkyl ist.

3. Verfahren nach Anspruch 1 oder 2, **dadurch gekennzeichnet, dass** Y ausgewählt ist aus der Gruppe bestehend aus R^{c}SO4-, SO₄²⁻, NO₃⁻, Cl⁻, Br⁻, I⁻, ClO₄⁻, BF₄⁻, PF₆⁻ und R^{c}SO₃⁻, wobei R^{c} H oder C₁-C₄ Alkyl ist.

4. Verfahren nach einem oder mehreren der Ansprüche 1 bis 3, **dadurch gekennzeichnet, dass** es in dem Temperaturbereich von 5 bis 35 °C stattfindet.

5. Verfahren nach einem oder mehreren der Ansprüche 1 bis 4, **dadurch gekennzeichnet, dass** ein oder mehrere Komplexe der Formel [FeLCl]Cl, [FeL(SO₄)], [MnLCL]Cl, [MnL(SO₄)], [FeLCl]PF₆, [FeL(H₂O)][PF₆]₂ oder [FeL(H₂O)][BF₄]₂ hergestellt werden, wobei L ausgewählt ist aus der Gruppe bestehend aus
2,4-Di-(2-pyridyl)-3-methyl-7-(pyridin-2-ylmethyl)-3,7-diazabicyclo[3.3.1]nonan-9-on-1,5-dimethyl-dicarboxylat (N2Py3o),
2,4-Di-(2-pyridyl)-3-(pyridin-2-ylmethyl)-7-methyl-3,7-diazabicyclo[3.3.1]nonan-9-on-1,5-dimethyl-dicarboxylat (N2Py3u),
2,4-Di-(2-pyridyl)-3-methyl-7-(pyridin-2-ylmethyl)-3,7-diazabicyclo[3.3.1]nonan-9-on-1,5-diethyl-dicarboxylat,
2,4-Di-(2-pyridyl)-3,7-bis-(pyridin-2-ylmethyl)-3,7-diazabicyclo[3.3.1]nonan-9-on-1,5-dimethyl-dicarboxylat (N2Py4),
2,4-Di-(2-pyridyl)-3,7-dimethyl-3,7-diazabicyclo[3.3.1]nonan-9-on-1,5-dimethyl-dicarboxylat (N2Py2),
2,4-Di-(2-pyridyl)-3,7-dimethyl-3,7-diazabicyclo[3.3.1]nonan-9-on-1,5-diethyl-dicarboxylat,
2,4-Di-(2-pyridyl)-3-methyl-7-(N,N'-dimethylethylamin)-3,7-diazabicyclo[3.3.1]nonan-9-on-1,5-dimethyl-dicarboxylat
und den entsprechenden Dihydroxyketalen.

6. Verfahren nach einem oder mehreren der Ansprüche 1 bis 5, **dadurch gekennzeichnet, dass** die Liganden der Formel (1) ausgewählt sind aus der Gruppe bestehend aus 2,4-Di-(2-pyridyl)-3-methyl-7-(pyridin-2-ylmethyl)-3,7-diazabicyclo[3.3.1]nonan-9-on-1,5-dimethyl-dicarboxylat (N2Py3o), 2,4-Di-(2-pyridyl)-3,7-dimethyl-3,7-diazabicyclo[3.3.1] nonan-9-on-1,5-dimethyl-dicarboxylat (N2Py2) und den entsprechenden Dihydroxyketalen.

7. Verfahren nach Anspruch 2, **dadurch gekennzeichnet, dass** X ausgewählt ist aus der Gruppe bestehend aus Cl⁻ und SO₄²⁻ und vorzugsweise Cl⁻ ist.

8. Verfahren nach Anspruch 3, **dadurch gekennzeichnet, dass** Y ausgewählt ist aus der Gruppe bestehend aus Cl⁻ und SO₄²⁻ und vorzugsweise Cl⁻ ist.

9. Verfahren nach einem oder mehreren der Ansprüche 1 bis 8, **dadurch gekennzeichnet, dass** das eingesetzte Eisen- oder Mangansalz ein Metall(II)-salz ist.

10. Verfahren nach Anspruch 9, **dadurch gekennzeichnet, dass** das Metall(II)-salz ausgewählt ist aus der Gruppe bestehend aus Eisen(II)-chlo(id, Eisen(II)-sulfat, Mangan(II)-chlorid und Mangan(II)-sulfat.

11. Verfahren nach Anspruch 10, **dadurch gekennzeichnet, dass** das Metall(II)-salz Eisen(II)-chlorid ist.

12. Verfahren nach einem oder mehreren der Ansprüche 1 bis 11, **dadurch gekennzeichnet, dass** ein oder mehrere Komplexe der Formel [FeLCl]Cl hergestellt werden, worin L 2,4-Di-(2-pyridyl)-3-methyl-7-(pyridin-2-ylmethyl)-3,7-diazabicyclo[3.3.1]nonan-9-on-1,5-dimethyl-dicarboxylat (N2Py3o) oder das entsprechende Dihydroxyketal bedeutet, und 2,4-Di-(2-pyridyl)-3-methyl-7-(pyridin-2-ylmethyl)-3,7-diazabicyclo[3.3.1]nonan-9-on-1,5-dimethyl-dicarboxylat oder das entsprechende Dihydroxyketal oder Mischungen davon mit Eisen(II)-chlorid umgesetzt werden.

13. Verfahren nach einem oder mehreren der Ansprüche 1 bis 12, **dadurch gekennzeichnet, dass** das Gewichtsverhältnis Aceton : Ligand der Formel (1) von 15,0 : 1,0 bis 0,5 : 1,0 beträgt.

14. Verfahren nach einem oder mehreren der Ansprüche 1 bis 13, **dadurch gekennzeichnet, dass** das Molverhältnis Ligand der Formel (1) : Metallsalz von 0,9 : 1,0 bis 1,2 : 1,0 beträgt.

15. Verfahren nach einem oder mehreren der Ansprüche 1 bis 14, **dadurch gekennzeichnet, dass** das Metallsalz in wässriger Lösung in einer Konzentration von 10 bis 50 Gew.-% eingesetzt wird.

## Claims

1. A process for preparing one or more metal complexes of the formula (2)
[MₐLₓXₙ]Yₘ (2)
where
M is a metal from the group of Mn(II), Mn(III), Mn(IV), Fe(II), Fe(III) and Fe(IV),
X is a coordinating compound selected from singly, doubly and triply charged anions and uncharged molecules capable of mono-, bi- or tridentate coordination to a metal,
Y is a noncoordinating counterion which ensures the charge balance of the complex,
a is 1 or 2,
x is 1 or 2,
n is a number from 0 to 4,
m is a number from 0 to 8, and
L is a ligand of the formula (1) or the protonated or deprotonated form thereof 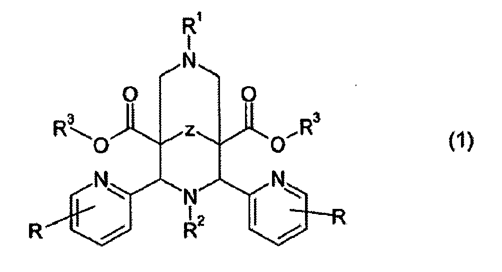
where
R is hydrogen, hydroxyl or C₁-C₄ alkyl;
R¹ is C₁-C₄ alkyl, C₆-C₁₀ aryl, pyridinyl-C₁-C₄-alkyl or (CH₂)ₖN(C₁-C₄-alkyl)₂;
R² is C₁-C₂₀ alkyl, C₆-C₁₀ aryl or pyridinyl-C1-C4-alkyl;
R³ is C₁-C₄ alkyl;
z is C=O or C(OH)₂ and
k is a number from 1 to 6,
wherein the reaction of one or more ligands of the formula (1) with an iron or manganese salt takes place in an acetone/water mixture within the temperature range from 0 to 50°C, and for this purpose a solution or suspension of the one or more ligands of the formula (1) in acetone is contacted with an aqueous metal salt solution of the iron or manganese salt within the temperature range in which the reaction takes place.

2. The process as claimed in claim 1, wherein X is selected from the group consisting of OH-, NO₃⁻, NO, S²-, R^{a}S-, PO₄³⁻, H₂O, CO₃²⁻, R^{b}OH, Cl-, Br-, CN-, ClO₄⁻, R^{a}COO- and SO₄²⁻, where R^{a} is H or C₁-C₄ alkyl and R^{b} is C₁-C₄ alkyl.

3. The process as claimed in claim 1 or 2, wherein Y is selected from the group consisting of R^{c}SO₄⁻, SO₄²⁻, NO₃⁻, Cl⁻, Br-, I⁻, ClO₄⁻, BF₄⁻, PF₆⁻ and R^{c}SO₃⁻, where R^{c} is H or C₁-C₄ alkyl.

4. The process as claimed in one or more of claims 1 to 3, which takes place within a temperature range from 5 to 35°C.

5. The process as claimed in one or more of claims 1 to 4, wherein one or more complexes of the formula [FeLCl]Cl, [FeL(SO₄)], [MnLCl]Cl, [MnL(SO₄)], [FeLCl]PF₆, [FeL(H₂O)] [PF₆]₂ or [FeL(H₂O)] [BF₄]₂ are prepared, where L is selected from the group consisting of
dimethyl 2,4-di(2-pyridyl)-3-methyl-7-(pyridin-2-ylmethyl)-3,7-diazabicyclo[3.3.1]nonan-9-one-1,5-dicarboxylate (N2Py3o),
dimethyl 2,4-di(2-pyridyl)3-(pyridin-2-ylmethyl.)-7-methyl-3,7-diazabicyclo[3.3.1]nonan-9-one-1,5-dicarboxylate (N2Py3u),
diethyl 2,4-di(2-pyridyl)-3-methyl-7-(pyridin-2-ylmethyl)-3,7-diazabicyclo[3.3.1]nonan-9-one-1,5-dicarboxylate,
dimethyl 2,4-di(2-pyridyl)-3,7-bis(pyridin-2-ylmethyl)-3,7-diazabicyclo[3.3.1]nonan-9-one-1,5-dicarboxylate (N2Py4),
dimethyl 2,4-di(2-pyridyl)-3,7-dimethyl-3,7-diazabicyclo[3.3.1]nonan-9-one-1,5-dicarboxylate (N2Py2),
diethyl 2,4-di(2-pyridyl)-3,7-dimethyl-3,7-diazabicyclo[3.3.1]nonan-9-one-1,5-dicarboxylate, dimethyl 2,4-di(2-pyridyl)-3-methyl-7-(N,N'-dimethylethylamine)-3,7-diazabicyclo[3.3.1]nonan-9-one-1,5-dicarboxylate
and the corresponding dihydroxy ketals.

6. The process as claimed in one or more of claims 1 to 5, wherein the ligands of the general formula (1) are selected from the group consisting of dimethyl 2,4-di(2-pyridyl)-3-methyl-7-(pyridin-2-ylmethyl)-3,7-diazabicyclo[3.3.1]nonan-9-one-1,5-dicarboxylate (N2Py3o), dimethyl 2,4-di(2-pyridyl)-3,7-dimethyl-3,7-diazabicyclo-[3.3.1]nonan-9-one-1,5-dicarboxylate (N2Py2) and the corresponding dihydroxy ketals.

7. The process as claimed in claim 2, wherein X is selected from the group consisting of Cl⁻ and SO₄²⁻ and is preferably Cl⁻.

8. The process as claimed in claim 3, wherein Y is selected from the group consisting of Cl⁻ and SO₄²⁻ and is preferably Cl⁻.

9. The process as claimed in one or more of claims 1 to 8, wherein the iron or manganese salt used is a metal(II) salt.

10. The process as claimed in claim 9, wherein the metal(II) salt is selected from the group consisting of iron(II) chloride, iron(II) sulfate, manganese(II) chloride and manganese(II) sulfate.

11. The process as claimed in claim 10, wherein the metal(II) salt is iron(II) chloride.

12. The process as claimed in one or more of claims 1 to 11, wherein one or more complexes of the formula [FeLCl]Cl are prepared in which L is dimethyl 2,4-di(2-pyridyl)-3-methyl-7-(pyridin-2-ylmethyl)-3,7-diazabicyclo[3.3.1]nonan-9-one-1,5-dicarboxylate (N2Py3o) or the corresponding dihydroxy ketal, and dimethyl 2,4-di(2-pyridyl)-3-methyl-7-(pyridin-2-ylmethyl)-3,7-diazabicyclo[3.3.1]-nonan-9-one-1,5-dicarboxylate or the corresponding dihydroxy ketal, or mixtures thereof, are reacted with iron(II) chloride.

13. The process as claimed in one or more of claims 1 to 12, wherein the weight ratio of acetone:ligand of the formula (1) is from 15.0:1.0 to 0.5:1.0.

14. The process as claimed in one or more of claims 1 to 13, wherein the molar ratio of ligand of the formula (1):metal salt is from 0.9:1.0 to 1.2:1.0.

15. The process as claimed in one or more of claims 1 to 14, wherein the metal salt in aqueous solution is used in a concentration of 10 to 50% by weight.

## Revendications

1. Procédé de fabrication d'un ou plusieurs complexes métalliques de la formule (2)
[MₐLₓXₙ]Yₘ (2),
dans laquelle
M est un métal du groupe Mn(II), Mn(III), Mn(IV), Fe(II), Fe(III) ou Fe(IV),
X est un composé coordonné sélectionné parmi des anions mono-, bi- ou trichargés ou des molécules neutres qui peuvent se coordonner à un métal de manière mono-, bi- ou tridentée,
Y représente un ion conjugué non coordonné qui garantit l'équilibre de charge du complexe,
a est 1 ou 2,
x est 1 ou 2,
n est un nombre de 0 à 4,
m est un nombre de 0 à 8, et
L représente un ligand de la formule (1) ou sa forme protonée ou déprotonée 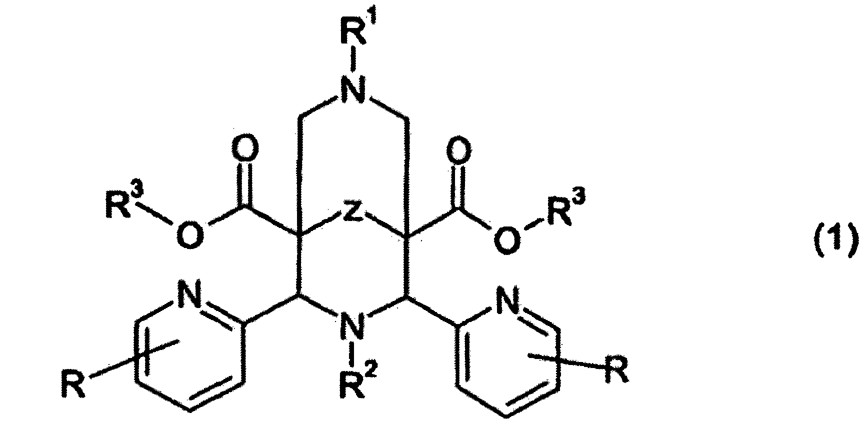 dans laquelle
R est hydrogène, hydroxyle ou alkyle en C₁-C₄ ;
R¹ est alkyle en C₁-C₄, aryle en C₆-C₁₀, pyridinyl-C₁-C₄-alkyle ou (CH₂)ₖN(C₁-C₄-alkyle)₂ ;
R² est alkyle en C₁-C₂₀, aryle en C₆-C₁₀ ou pyridinyl-C₁-C₄-alkyle ;
R³ est alkyle en C₁-C₄ ;
z est C=O ou C(OH)₂ et
k signifie un nombre de 1 à 6,
**caractérisé en ce que** la conversion d'un ou plusieurs ligands de la formule (1) avec un sel de fer ou de manganèse a lieu dans un mélange d'acétone/eau dans la plage de température de 0 à 50°C et une solution ou une suspension du ou des ligands de la formule (1) dans de l'acétone est amenée en contact à cet effet avec une solution aqueuse de sel métallique du sel de fer ou de manganèse dans la plage de température à laquelle la conversion a lieu.

2. Procédé selon la revendication 1, **caractérisé en ce que** X est sélectionné parmi le groupe constitué de OH-, NO₃-, NO, S²⁻, R^{a}S⁻, PO₄³⁻, H₂O, CO₃²⁻, R^{b}OH, Cl⁻, Br⁻, CN⁻, ClO₄⁻, R^{a}COO⁻ et SO₄²⁻, dans lequel R^{a} est H ou alkyle en C₁-C₄ et R^{b} est alkyle en C₁-C₄.

3. Procédé selon la revendication 1 ou 2, **caractérisé en ce que** Y est sélectionné parmi le groupe constitué de R^{c}SO₄⁻, SO₄²⁻, NO₃⁻, Cl⁻, Br⁻, I⁻, ClO₄⁻, BF₄⁻, PF₆⁻ et R^{c}SO₃⁻, dans lequel R^{c} est H ou alkyle en C₁-C₄.

4. Procédé selon une ou plusieurs des revendications 1 à 3, **caractérisé en ce qu'**il a lieu dans la plage de température de 5 à 35°C.

5. Procédé selon une ou plusieurs des revendications 1 à 4, **caractérisé en ce qu'**un ou plusieurs complexes de la formule [FeLCl]Cl, [FeL(SO₄)], [MnLCl]Cl, [MnL(SO₄)], [FeLCl]PF₆, [FeL(H₂O)][PF₆]₂ ou [FeL(H₂O)][BF₄]₂ sont fabriqués, dans laquelle L est sélectionné parmi le groupe constitué de
2,4-di-(2-pyridyl)-3-méthyl-7-(pyridin-2-ylméthyl)-3,7-diazabicyclo[3.3.1]nonan-9-one-1,5-diméthyl-dicarboxylate (N2Py3o),
2,4-di-(2-pyridyl)-3-(pyridin-2-ylméthyl)-7-méthyl-3,7-diazabicyc1o[3.3.1]nonan-9-one-1,5-diméthyl-dicarboxylate (N2Py3u),
2,4-di-(2-pyridyl)-3-méthyl-7-(pyridin-2-ylméthyl)-3,7-diazabicyclo[3.3.1]nonan-9-one-1,5-diéthyl-dicarboxylate,
2,4-di-(2-pyridyl)-3,7-bis-(pyridin-2-ylméthyl)-3,7-diazabicyclo[3.3.1]nonan-9-one-1,5-diméthyl-dicarboxylate (N2Py4),
2,4-di-(2-pyridyl)-3,7-diméthyl-3,7-diazabicyclo[3.3.1]nonan-9-one-1,5-diméthyl-dicarboxylate (N2Py2),
2,4-di-(2-pyridyl)-3,7-diméthyl-3,7-diazabicyclo[3.3.1]nonan-9-one-1,5-diéthyl-dicarboxylate,
2,4-di-(2-pyridyl)-3-méthyl-7-(N,N'-diméthyléthylamine)-3,7-diazabicyclo[3.3.1]nonan-9-one-1,5-diméthyl-dicarboxylate
et les dihydroxycétals correspondants.

6. Procédé selon une ou plusieurs des revendications 1 à 5, **caractérisé en ce que** les ligands de la formule (1) sont sélectionnés parmi le groupe constitué de 2,4-di-(2-pyridyl)-3-méthyl-7-(pyridin-2-ylméthyl)-3,7-diazabicyclo[3.3.1]nonan-9-one-1,5-diméthyl-dicarboxylate (N2Py3o), 2,4-di-(2-pyridyl)-3,7-diméthyl-3,7-diazabicyclo[3.3.1]nonan-9-one-1,5-diméthyl-dicarboxylate (N2Py2) et les dihydroxycétals correspondants.

7. Procédé selon la revendication 2, **caractérisé en ce que** X est sélectionné parmi le groupe constitué de Cl⁻ et SO₄²⁻ et de préférence Cl⁻.

8. Procédé selon la revendication 3, **caractérisé en ce que** Y est sélectionné parmi le groupe constitué de Cl⁻ et SO₄²⁻ et de préférence Cl⁻.

9. Procédé selon une ou plusieurs des revendications 1 à 8, **caractérisé en ce que** le sel de fer ou de manganèse utilisé est un sel métallique(II).

10. Procédé selon la revendication 9, **caractérisé en ce que** le sel métallique(II) est sélectionné parmi le groupe constitué du chlorure de fer(II), sulfate de fer(II), chlorure de manganèse(II) et sulfate de manganèse(II).

11. Procédé selon la revendication 10, **caractérisé en ce que** le sel métallique(II) est le chlorure de fer(II).

12. Procédé selon une ou plusieurs des revendications 1 à 11, **caractérisé en ce qu'**un ou plusieurs complexes de la formule [FeLCl]Cl sont fabriqués, dans laquelle L signifie 2,4-di-(2-pyridyl)-3-méthyl-7-(pyridin-2-ylméthyl)-3,7-diazabicyclo[3.3.1]nonan-9-one-1,5-diméthyl-dicarboxylate (N2Py3o) ou le dihydroxycétal correspondant, et le 2,4-di-(2-pyridyl)-3-méthyl-7-(pyridin-2-ylméthyl)-3,7-diazabicyclo[3.3.1]nonan-9-one-1,5-diméthyl-dicarboxylate ou le dihydroxycétal correspondant ou des mélanges de ceux-ci sont convertis avec du chlorure de fer(II).

13. Procédé selon une ou plusieurs des revendications 1 à 12, **caractérisé en ce que** le rapport pondéral acétone/ligand de la formule (1) va de 15,0/1,0 à 0,5/1,0.

14. Procédé selon une ou plusieurs des revendications 1 à 13, **caractérisé en ce que** le rapport molaire ligand de la formule (1)/sel métallique va de 0,9/1,0 à 1,2/1,0.

15. Procédé selon une ou plusieurs des revendications 1 à 14, **caractérisé en ce que** le sel métallique en solution aqueuse est utilisé à une concentration de 10 à 50 % en poids.
